# EUROPÄISCHE PATENTSCHRIFT

(11) **EP 0 793 026 B1**
(45) Veröffentlichungstag und Bekanntmachung des Hinweises auf die Patenterteilung: **31.07.2002**
(21) Anmeldenummer: 97810065.9
(22) Anmeldetag: 05.02.1997
(51) Int. Cl.: F16B 13/12

(54) **Spreizdübel**
Expansion dowel
Cheville d'expansion

(30) Priorität: 02.03.1996 DE 19608079
(43) Veröffentlichungstag der Anmeldung: 03.09.1997
(73) Patentinhaber: HILTI Aktiengesellschaft, 9494 Schaan (LI)
(72) Erfinder: Hartman, Markus, 87665 Mauerstetten (DE)
(74) Vertreter: Wildi, Roland

(56) Entgegenhaltungen:
- EP-A- 0 118 006
- EP-A- 0 306 681
- FR-A- 2 307 166
- FR-A- 2 349 053
- US-A- 4 653 132

## Beschreibung

Die Erfindung betrifft einen Spreizdübel mit Spreizhülse und Spreizkörper gemäss dem Oberbegriff des Patentanspruchs 1.

Spreizdübel der gattungsgemässen Art, wie beispielsweise in der EP-A1-118006 beschrieben, umfassen eine Spreizhülse, die in an ihrem einen, rückwärtigen Ende Mittel zum Lastangriff besitzt und deren gegenüberliegender Abschnitt einen Spreizbereich aufweist, der mit zum setzrichtungsseitigen Vorderende offenen Längsschlitzen ausgestattet ist. Ein Spreizkörper ist in einer sich zum setzrichtungsseitigen Vorderende verjüngenden Durchgangsbohrung der Spreizhülse, unter Aufweiten des Spreizbereichs, aus einer Ausgangsposition in eine. Endposition vortreibbar. Derartige Spreizdübel sind aus dem Stand der Technik hinlänglich bekannt werden wegen des üblicherweise beim Setzvorgang schlagend in der Durchgangsbohrung vorgetriebenen Spreizkörpers vielfach auch als Schlagspreizdübel bezeichnet.

Ferner ist aus der EP-A1-601 975 ein Spreizdübel mit einem Bolzenelement und einem Spreizkörper bekannt, der mit mindestens mittels einer Keil- oder Konusmantelfläche in Spreizkontakt mit dem Bolzenelement steht. Eine unsymmetrische Ausführung der Keil- oder Konusmantelfläche führt zu einer unsymmetrischen Beanspruchung des Spreizdübels beim Eintreiben, die wiederum zu einer Biegeverspannung des Bolzenelements führt. Durch diese Biegeverspannung wird verhindert, dass sich beim Aufweiten des, das Bohrloch umgebenden Materials, der Spreizeingriff des Spreizdübels lockert.

Bei diesen bekannten Spreizdübeln wird der Spreizkörper in seiner Endstellung durch Reibungsschluss in der Durchgangsbohrung gehalten. Unter Dauerlast, insbesondere bei dynamischer Beanspruchung, kann sich der Spreizkörper in einem sich dynamisch geringfügig öffnenden Riss lockern und in der Durchgangsbohrung mehr oder weniger weit zurückgleiten. Dadurch wird die Spreizkraft des Spreizdübels verringert und der Auszugswert des Spreizdübels nimmt ab. Ein weiteres Problem bei diesen bekannten Spreizdübeln besteht darin, dass insbesondere in hochfestem Beton und engem Bohrloch der Spreizkörper nicht immer vollständig in seine Endposition vorgetrieben werden kann. Dadurch wird der Spreizbereich nicht im erforderlichen Ausmass aufgeweitet und die einwandfreie Funktion des Spreizdübels kann beeinträchtigt sein. Insbesondere kann es vorkommen, dass dadurch die geforderten Auszugswerte nicht erreicht werden.

Die Aufgabe der vorliegenden Erfindung bestent daher darin, einen Spreizdübel mit Spreizhülse und Spreizkörper dahingehend weiterzuentwickeln, dass der Spreizkörper nach Beendigung des Setzvorgangs in seiner Endstellung gesichert ist. Er soll sich auch bei dynamischer Belastung und dynamischem Öffnen eines Risses nicht mehr lockem und in der Durchgangsbohrung zurückgleiten können. Die durch den in seine Endposition vorgetriebenen Spreizkörper auf den Spreizbereich ausgeübte Spreizkraft soll unverändert erhalten bleiben. Der Spreizkörper soll auch bei Verankerungen in hochfestem Beton und engen Bohrlöchem zuverlässig in der Durchgangsbohrung der Spreizhülse in seine Endposition vorgetrieben werden können, um die geforderten Auszugswerte zu erreichen.

Die Lösung dieser Aufgaben besteht in einem Spreizdübel mit den im Patentanspruchs 1 angeführten Merkmalen. Der Lösung liegt die erfinderische Idee zugrunde, die Spreizhülse und/oder den Spreizkörper derart auszubilden, dass beim Setzvorgang wenigstens in einem Teilbereich der Längserstreckung des Spreizkörpers eine ungleichmässig symmetrisch radiale Verformung erzielt wird.

Gemäss einer bevorzugten Ausführungsform wird dies dadurch erreicht, dass benachbarte Längsschlitze unterschiedlich grosse Schlitzbreiten aufweisen. Durch die ungleichmässig breite Ausbildung benachbarter Längsschlitze wird auf den in seine Endposition vorgetriebenen Spreizkörper eine über seinen Umfang ungleichmässige Verformungskraft ausgeübt. Dadurch wird er bevorzugt in die breiteren Längsschlitze verdrängt, wodurch es am rückwärtigen Ende der breiten Längsschlitze zu einem Formschluss zwischen der geringfügig deformierten Mantelfläche des Spreizkörpers und der die Längsschlitze axial begrenzenden Wandung der Spreizhülse kommt. Der Formschluss wird durch die nach dem Aufspreizen des Spreizbereichs etwa V-förmige Längsgestalt der Längsschlitze noch untersfützt. Durch diesen Formschluss wird der Spreizkörper in seiner Endposition gesichert. Er kann sich auch bei dynamischer Dauerbelastung nicht mehr lösen und kann in der Durchgangsbohrung nicht mehr in Richtung seiner Aufgangsposition zurückgleiten. Dadurch bleibt die Aufspreizkraft, welche der Spreizkörper auf den Spreizbereich der Spreizhülse ausübt, erhalten.

Ein weiterer Vorteil der unterschiedlich breit ausgebildeten Längsschlitze besteht darin, dass der Spreizkörper auch bei Verankerungen in hochfestem Beton und engen Bohrlöchern zuverlässig in seine Endposition vorgetrieben werden kann. Indem der Spreizkörper durch die ungleichmässigen radialen Verformungskräfte bevorzugt in die breiteren Längsschlitze verdrängt wird, ist die Gefahr eines Blockierens des Spreizkörpers, bevor er seine Endposition erreicht hat, deutlich reduziert. Anstatt in der Durchgangsbohrung mit der Spreizhülse festzufressen bzw. sogar kaltzuverschweissen kann ein Teil des Spreizkörpers in die breiteren Längsschlitze ausweichen, und der Spreizkörper kann zuverlässig in seine vorbestimmte Endposition vorgetrieben werden.

Vorzugsweise wird eine gerade Anzahl von Längsschlitzen, beispielsweise vier, vorgesehen, wobei einander auf einem Durchmesser der Spreizhülse gegenüberliegende Längsschlitze die gleiche Schlitzbreite aufweisen. Durch die symmetrische Anordnung der Längsschlitze bleibt der Spreizkörper auch während des Ausweichens in die breiteren Längsschlitze geführt und zentriert und es kommt zu einer weitgehend symmetrischen Aufspreizung des Spreizbereichs.

Es erweist sich als zweckmässig, wenn die Schlitzbreite der breitesten Längsschlitze bis etwa das Doppelte der Schlitzbreite der engsten Längsschlitze beträgt und das etwa 1-fache bis etwa 3-fache der Wandstärke der Spreizhülse am rückwärtigen Ende beträgt. Diese Dimensionierungen stellen einen sehr guten Kompromiss dar zwischen den unterschiedlichen Anforderungen an die Längsschlitze. Einerseits sollen sie so eng wie möglich sein, um möglichst wenig der Mantelfläche der Spreizhülse für den Reibungsschluss mit der Bohrlochwandung zu verlieren. Andererseits sollen die breiteren Längsschlitze so breit wie möglich sein, um über den Umfang des Spreizkörpers eine möglichst ungleichmässige radiale Verformungskraft zu erzielen, die in einem Ausweichen eines Teils des Spreizkörpers in den Längsschlitz und in einem Formschluss zwischen dem Spreizkörper und der Spreizhülse resultiert.

Das Verdrängen der an die breiteren Längsschlitze angrenzenden Bereiche des Spreizkörpers in die Längsschlitze wird dadurch unterstützt, dass die Begrenzungsflächen der breitesten Längsschlitze an ihren der Durchgangsbohrung zugewandten Kanten abgeschrägt sind. Die derart gefasten Kanten erleichtern das Verdrängen des Spreizkörpers in die Längsschlitze.

Das Ausweichen eines Teilbereichs des Spreizkörpers in die breitesten Längsschlitze wird dadurch unterstützt, dass in einem Abschnitt des Spreizkörpers seine Eigensteifigkeit geschwächt wird. Zu diesem Zweck ist der Spreizkörper an seinem dem Vorderende der Spreizhülse zugewandten Ende mit einer Sacklochbohrung versehen, die sich über etwa 1/2 bis etwa 1/3 der Gesamtlänge des Spreizkörpers erstreckt. Durch die wegen der ungleichmässigen Schlitzbreiten ungleichmässige radiale Belastung knickt der Spreizkörper in dem mit der Sacklochbohrung versehenen Abschnitt ähnlich einem in einen zweibackigen Schraubstock eingespannten Rohr und weicht in die breiteren Schlitze aus. Dadurch wird der Formschluss des Spreizkörpers mit der Spreizhülse noch weiter gefördert.

Die ungleichmässige radiale Belastung wird noch dadurch verstärkt, dass der Spreizkörper im Bereich der Sacklochbohrung unterschiedliche Wandstärken aufweist und dass die Sacklochbohrung einen von der kreisförmigen Gestalt abweichenden Querschnitt aufweist, wobei die Bereiche des Spreizkörpers mit den geringsten Wandstärken an die Längsschlitze mit den grössten Schlitzbreiten angrenzen.

Eine weitere bevorzugte Ausführungs form zeichnet sich dadurch aus, dass der Spreizkörper an seinem dem Vorderende der Spreizhülse zugewandten Ende eine Sacklochbohrung aufweist, die sich über etwa 1/2 bis etwa 3/4 der Gesamtlänge des Spreizkörpers erstreckt und einen von der kreisförmigen Gestalt abweichenden Querschnitt besitzt, wobei die Bereiche des Spreizkörpers mit den geringsten Wandstärken an Längsschlitze angrenzen. Die ungleichmässige radiale. Belastung und damit die ungleichmässige radiale Deformation des Spreizkörpers ist in diesem Fall allein durch den von der kreisförmigen Gestalt abweichenden Querschnitt der Sacklochbohrung gegeben. Durch die Festlegung der Bereiche mit der geringsten Wandstärke sind die Knickstellen des Spreizkörpers festgelegt. Das Ausweichen dieses Abschnitts des Spreizkörpers in die Längsschlitze ist dadurch gewährleistet, dass die Bereiche mit den geringsten Wandstärken an die Längsschlitze angrenzen.

Der Querschnitt der Sacklochbohrung kann elliptisch oder quadratisch sein, wobei die Längsachse der Ellipse bzw. wenigstens eine Diagonale des Quadrats im wesentlichen mit einem Durchmesser der Spreizhülse zusammenfallen, welcher zwei einander gegenüberliegende Längsschlitze verbindet. Auf diese Weise ist der Zusammenbau des Spreizdübels einfach automatisierbar und kann von mit einfachen Bilderkennungssystemen ausgestatteten automatischen Fertigungseinrichtungen vorgenommen werden.

In Verbindung mit einem mit einer von der Kreisform abweichenden Sacklochbohrung ausgestatteten Spreizkörper können alle Längsschlitze im Spreizbereich der Spreizhülse die gleiche Schlitzbreite aufweisen. Das Ausweichen der Bereiche des Spreizkörpers mit den geringsten Wandstärken in die angrenzenden Längsschlitze wird dadurch gefördert, dass die der Durchgangsbohrung zugewandten Kanten der Begrenzungsflächen dieser Längsschlitze gefast sind.

Vorzugsweise ist die Spreizhülse aus Stahl, beispielsweise für Anwendungen in korrosiven Umgebungen aus einem rostbeständigen Edelstahl, und besteht der Spreizkörper aus einem weicheren Metall, insbesondere aus Aluminium. Auf diese Weise ist gewährleistet, dass der Spreizkörper einerseits zuverlässig in die Endposition vorgetrieben werden kann, beim Setzvorgang deformiert wird, teilweise in die Längsschlitze ausweicht und formschlüssig mit der Spreizhülse verbunden wird und andererseits der Spreizkörper noch genügend Eigensteifigkeit aufweist, um den Spreizbereich der Spreizhülse im erforderlichen Ausmass aufzuspreizen und den gewünschten Reibungsschluss mit der Bohrlochwandung zu erzeugen.

Im folgenden wird die Erfindung mit allen ihr als wesentlich zugehörigen Details anhand von in den schematischen Zeichnungen nicht massstabsgetreu dargestellten Ausführungsbeispielen näher erläutert. Es zeigen:
- Fig. 1: einen erfindungsgemässer Spreizdübel im Axialschnitt;
- Fig. 2: einen Querschnitt des unverspreizten Spreizdübels gemäss Fig. 1 durch den Spreizbereich, senkrecht zur Dübelachse;
- Fig. 3: einen Querschnitt des verspreizten Spreizdübels;
- Fig. 4: einen Querschnitt einer zweiten Variante des erfindungsgemässen Spreizdübels im unverspreizten Zustand; und
- Fig. 5: eine Seitenansicht eines in einem Bohrloch verspreizten erfindungsgemässen Spreizdübels.

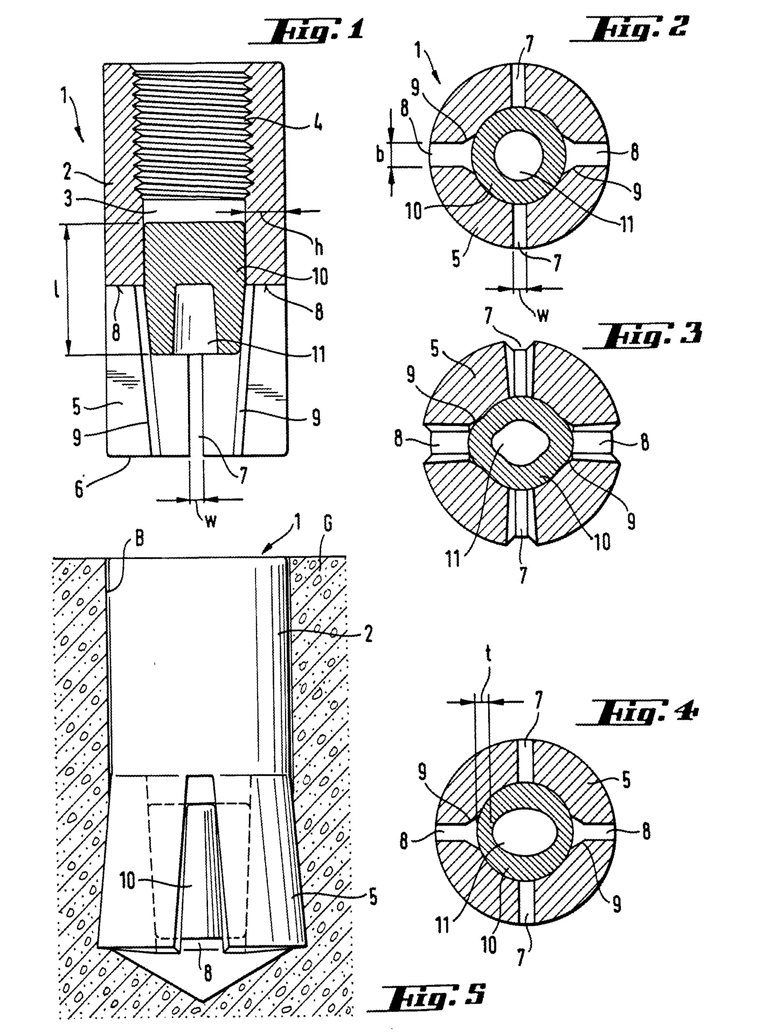

Ein erfindungsgemässer Spreizdübel ist in Fig. 1 gesamthaft mit dem Bezugszeichen 1 versehen. Er umfasst eine Spreizhülse 2, die in an ihrem einen, rückwärtigen Ende Mittel 4 zum Lastangriff besitzt. Die Lastangriffsmittel 4 können beispielsweise, wie dargestellt, ein Innengewinde sein. An ihrem gegenüberliegender Abschnitt weist die Spreizhülse 2 einen Spreizbereich 5 auf, der mit zum setzrichtungsseitigen Vorderende 6 der Spreizhülse 2 offenen Längsschlitzen ausgestattet ist. In der Axialschnittdarstellung gemäss Fig. 1 ist ein Längsschlitz 7 angedeutet. Vorzugsweise besitzt der Spreizbereich 5 eine gerade Anzahl von Längsschlitzen, die einander jeweils auf einem Durchmesser der Spreizhülse 2 gegenüberliegen. Im dargestellten Ausführungsbeispiel beträgt die Anzahl der Längsschlitze vier. Die Spreizhülse besitzt eine Durchgangsbohrung 3, die sich im Spreizbereich 5 zum Vorderende 6 der Spreizhülse verjüngt. Ein Spreizkörper 10 ist in der sich verjüngenden Durchgangsbohrung 3 unter Aufweiten des Spreizbereichs 5 aus einer Ausgangsposition in eine Endposition vortreibbar. Soweit entspricht der Spreizdübel 1 den aus dem Stand der Technik bekannten Spreizdübeln.

Der Unterschied des erfindungsgemässen Spreizdübels zu den Spreizdübeln des Stands der Technik besteht in der Ausbildung des Spreizbereiches 5 und/oder des Spreizkörpers 10, um beim Setzvorgang wenigstens in einem Teilbereich der Längserstreckung des Spreizkörpers 10 eine ungleichmässige radiale Verformung zu erzielen. Gemäss den schematischen Darstellungen in Fig. 2 und 3 weisen die benachbarten Längsschlitze 7, 8 des Spreizbereiches 5 der Spreizhülse 2 unterschiedlich grosse Schlitzbreiten w und b auf. Die Längsschlitze 7 mit der engeren Schlitzbreite w liegen einander in der Darstellung vertikal gegenüber, während die Längsschlitze 8 mit der grösseren Schlitzbreite b einander horizontal gegenüberliegen. Die Schlitzbreite b der breiteren Längsschlitze 8 beträgt bis etwa das Doppelte der Schlitzbreite w der engen Schlitze 7. Dabei ist die Schlitzbreite b der breiteren Schlitze derart gewählt, dass sie das etwa 1-fache bis etwa 3-fache der Wandstärke h der Spreizhülse in ihrem rückwärtigen Bereich mit dem Innengewinde 4 beträgt. Die seitlichen Begrenzungflächen der breiteren Längsschlitze 8 sind, wie in Fig. 2 und 3 angedeutet, an ihren der Durchgangsbohrung 3 zugewandten Kanten 9 abgeschrägt.

Der Spreizkörper 10 kann eine zylindrische, zylindrisch-kegelige, kegelige oder ballige Aussenkontur aufweisen. Er kann als einstückiger Block ausgebildet sein oder, wie in den Darstellungen angedeutet, an seinem dem Vorderende 6 der Spreizhülse 2 zugewandten Ende eine Sacklochbohrung 11 aufweisen, die sich über etwa 1/2 bis etwa 2/3 der axialen Gesamtlänge I des Spreizkörpers 10 erstreckt. Die Sacklochbohrung 11 kann zylindrisch verlaufen oder, wie in Fig. 1 dargestellt, sich zum Grund der Bohrung leicht verengen. Die Sacklochbohrung 11 unterstützt die radial unterschiedliche Verformung des Spreizkörpers 10, die beim Verspreizen durch die vom Beton über den Spreizbereich übertragenen radialen Verformungskräfte hervorgerufen werden.

Die radial unterschiedliche Verformung des Spreizkörpers 10 kann noch dadurch unterstützt werden, dass die Sacklochbohrung 11 einen von der kreisförmigen Gestalt abweichenden Querschnitt aufweist. Dabei ist der Spreizkörper derart in der Durchgangsbohrung 3 angeordnet, dass die Bereiche des Spreizkörpers 10 mit der geringsten Wandstärke t an die breiteren Längsschlitze angrenzen. Der Querschnitt der Sacklochbohrung 11 kann dabei beispielsweise die Form einer Ellipse oder die eines Quadrats aufweisen. Die Anordnung des Spreizkörpers 10 ist derart, dass die Hauptachse der Ellipse bzw. wenigstens eine Diagonale des Quadrats mit dem Durchmesser der Spreizhülse 2 übereinstimmt, an dem die breitesten Längsschlitze 8 einander gegenüberliegen.

Fig. 4 zeigt eine Variante des erfindungsgemässen Spreizdübels 1, bei dem die Sacklochbohrung 11 im Spreizkörper 10 einen von der kreisförmigen Gestalt abweichenden Querschnitt aufweist. Insbesondere zeigt die Darstellung eine Sacklockbohrung 11 mit elliptischem Querschnitt. Die Längsschlitze 7, 8 bei dieser Ausführungsvariante des erfindungsgemässen Spreizdübels 1 weisen alle die gleiche Schlitzweite auf. Die unterschiedliche radiale Verformung des Spreizkörpers 10 beim Setzvorgang wird durch den elliptischen Querschnitt der Sacklochbohrung 11 unterstützt. Die Hauptachse der Ellipse stimmt dabei mit dem Durchmesser der Spreizhülse 2 überein, an dem einander zwei Längsschlitze 8 gegenüberliegen. Zur Erleichterung des Eindringens des Mantels des radial ungleichmässig verformten Spreizkörpers 10 in die Längsschlitze 8 sind die der Durchgangsbohrung 3 zugewandten Kanten 9 dieser Längsschlitze 9 abgeschrägt.

Fig. 5 schliesslich zeigt einen erfindungsgemässen Spreizdübel 1, der in einer Aufnahmebohrung B in einem Untergrund G, beispielsweise in Beton, verspreizt ist. In der schematische Darstellung ist ersichtlich, wie der aufgeweitete Spreizbereich 5 der Spreizhülse 2 gegen die Bohrlochwandung gepresst ist. Der angedeutete Längsschlitz 8 besitzt im aufgespreizten Zustand eine leicht V-förmige Gestalt. Der beim Verspreizen teilweise in den Längsschlitz 8 eingedrungene Spreizkörper 10 ist angedeutet. Die V-förmige Gestalt des aufgeweiteten Längsschlitzes 8 unterstützt die formschlüssige Blockierung des Spreizkörpers 10 in dem Längsschlitz 8. Dadurch kann sich der Spreizkörper 10 auch bei einem leichten dynamisch Öffnen eines Spaltes unter Dauerbelastung nicht mehr lösen und nicht in der Durchgangsbohrung 3 zurückgleiten. Die vom Spreizkörper 10 auf den Spreizbereich 5 ausgeübte Spreizkraft bleibt erhalten.

Als Material für die Spreizhülse 2 eignet sich Stahl, insbesondere ein korrosionsbeständiger Edelstahl für Anwendungen in korrosiver Umgebung. Der Spreizkörper 10 besteht vorzugsweise aus einem weicheren Metall als die Spreizhülse 2. Beispielsweise ist er aus Aluminium gefertigt.

## Patentansprüche

1. Spreizdübel mit einer Spreizhhülse (2), die an ihrem einen, rückwärtigen Ende mit Lastangriffsmitteln (4) ausgestattet ist und an ihrem gegenüberliegenden Abschnitt einen Spreizbereich (5) aufweist, der mit zum setzrichtungsseitigen Vorderende (6) offenen Längsschlitzen (7, 8) ausgestattet ist, und mit einem Spreizkörper (10), der in einer sich zum setzrichtungsseitigen Vorderende (6) verjüngenden Durchgangsbohrung (3) der Spreizhülse (2) unter Aufweiten des Spreizbereichs (5) aus einer Ausgangsposition in eine Endposition vortreibbar ist, **dadurch gekennzeichnet, dass** an der Spreizhülse (2) und/oder am Spreizkörper (10) Mittel vorgesehen sind, wodurch beim Setzvorgang wenigstens in einem Teilbereich der Längserstreckung des Spreizkörpers (10) eine ungleichmässig symmetrisch radiale Verformung erzielbar ist.

2. Spreizdübel nach Anspruch 1, **dadurch gekennzeichnet, dass** die Mittel durch benachbarte Längsschlitze (7, 8) im Spreizbereich (5) der Spreizhülse (2) gebildet sind, die unterschiedlich grosse Schlitzbreiten (w, b) aufweisen.

3. Spreizdübel nach Anspruch 2, **dadurch gekennzeichnet, dass** eine gerade Anzahl von Längsschlitzen (7, 8) vorgesehen ist, wobei einander auf einem Durchmesser der Spreizhülse (2) gegenüberliegende Längsschlitze (7, 8) die gleiche Schlitzbreite (w, b) aufweisen.

4. Spreizdübel nach Anspruch 2 oder 3, **dadurch gekennzeichnet, dass** die Schlitzbreite (b) der breitesten Längsschlitze (8) bis etwa das Doppelte der Schlitzbreite (w) der engsten Längsschlitze (7) beträgt und das etwa 1-fache bis etwa 3-fache der Wandstärke (h) der Spreizhülse (2) an ihrem rückwärtigen Ende eträgt.

5. Spreizdübel nach einem der Ansprüche 2-4 **dadurch gekennzeichnet, dass** die Begrenzungsflächen der breitesten Längsschlitze (8) an ihren der Durchgangsbohrung (3) zugewandten Kanten (9) abgeschrägt sind.

6. Spreizdübel nach einem der Ansprüche 2-5, **dadurch gekennzeichnet, dass** der Spreizkörper (10) an seinem dem Vorderende (6) der Spreizhülse (2) zugewandten Ende mit einer Sacklochbohrung (11) versehen ist, die sich über etwa 1/2 bis etwa 1/3 der Gesamtlänge (I) des Spreizkörpers (10) erstreckt.

7. Spreizdübel nach Anspruch 6, **dadurch gekennzeichnet, dass** der Spreizkörper (10) im Bereich der Sacklochbohrung (11) unterschiedliche Wandstärken besitzt und dass die Sacklochbohrung (11) einen von der kreisförmigen Gestalt abweichenden Querschnitt aufweist, wobei die Bereiche des Spreizkörpers (10) mit den geringsten Wandstärken (t) an die Längsschlitze (8) mit den grössten Schlitzbreiten (b) angrenzen.

8. Spreizdübel nach Anspruch 1 **dadurch gekennzeichnet, dass** die Mittel von einer Sacklochbohrung (11) im Spreizkörper (10) gebildet sind, die am dem Vorderende (6) der Spreizhülse (2) zugewandten Ende des Spreizkörpers (10) mündet, sich über etwa 1/2 bis etwa 3/4 der Gesamtlänge (I) des Spreizkörpers (10) erstreckt und einen von der kreisförmigen Gestalt abweichenden Querschnitt aufweist, wobei die Bereiche des Spreizkörpers (10) mit den geringsten Wandstärken (t) an Längsschlitze (7, 8) angrenzen.

9. Spreizdübel nach Anspruch 8, **dadurch gekennzeichnet, dass** der Querschnitt der Sacklochbohrung (11) elliptisch oder quadratisch ist, wobei die Hauptachse der Ellipse bzw. wenigstens eine Diagonale des Quadrats im wesentlichen mit einem Durchmesser der Spreizhülse (2) zusammenfallen, welcher zwei einander gegenüberliegende Längsschlitze (7 bzw. 8) verbindet.

10. Spreizdübel nach Anspruch 9, **dadurch gekennzeichnet, dass** alle Längsschlitze (7, 8) die gleiche Schlitzbreite aufweisen und dass die der Durchgangsbohrung (3) zugewandten Kanten (9) der Begrenzungsflächen derjenigen Längsschlitze (8), an welche die Bereiche des Spreizkörpers (11) mit den geringsten Wandstärken (t) angrenzen, gefast sind.

11. Spreizdübel nach einem der vorangehenden Ansprüche, **dadurch gekennzeichnet, dass** die Spreizhülse (2) aus Stahl besteht und dass der Spreizkörper (10) aus einem weicheren Metall, insbesondere aus Aluminium, besteht.

## Claims

1. Expanding dowel having an expanding sleeve (2), which at its rear end has means (4) for distributing the load and on its portion lying opposite has an expansion region (5) which is provided with elongated slots (7, 8) which are open towards the front end (6) in direction of setting, and having an expansion member (10), which can be driven in a through bore (3), which is disposed in the expanding sleeve (2) and tapers towards the front end (6) in direction of setting, with widening-out of the expansion region (5) from a starting position into an end position, **characterized in that** means are provided on the expanding sleeve (2) and/or on the expansion member (10) by which, during the setting operation, an unevenly symmetrical radial deformation can be achieved at least in one portion of the longitudinal extension of the expansion member (10).

2. Expanding dowel according to Claim 1, **characterized in that** the means are formed by adjacent elongated slots (7, 8) located in the expansion region (5) of the expanding sleeve (2), said elongated slots having slot widths (w, b) which are different in size.

3. Expanding dowel according to Claim 2, **characterized in that** an even number of elongated slots (7, 8) is provided, elongated slots (7, 8) located opposite one another across a diameter of the expanding sleeve (2) having the same width of slot (w, b).

4. Expanding dowel according to Claim 2 or 3, **characterized in that** the width (b) of the widest elongated slots (8) amounts to up to approximately twice the width (w) of the narrowest elongated slots (7) and approximately 1 to 3 times the wall thickness (h) of the expanding sleeve (2) at its rear end.

5. Expanding dowel according to one of Claims 2 to 4, **characterized in that** the peripheral faces of the widest elongated slots (8) are bevelled at their edges (9) facing the through bore (3).

6. Expanding dowel according to one of Claims 2 to 5, **characterized in that** the expansion member (10) is provided with a blind-end bore (11) at its end facing towards the front end (6) of the expanding sleeve (2), said blind-end bore (11) extending over approximately 1/2 up to approximately 1/3 of the overall length (1) of the expansion member (10).

7. Expanding dowel according to Claim 6, **characterized in that** the expansion member (10) has different wall thicknesses in the region of the blind-end bore (11) and **in that** the blind-end bore (11) has a cross-section which deviates from the circular form, the regions of the expansion member (10) with the smallest wall thicknesses (t) bordering on the elongated slots (8) having the largest widths of slot (b).

8. Expanding dowel according to Claim 1, **characterized in that** the means are formed by a blind-end bore (11), disposed in the expansion member (10), which opens at the end of the expansion member (10) facing towards the front end (6) of the expanding sleeve (2), extends over approximately 1/2 to approximately 3/4 of the overall length (1) of the expansion member (10) and has a cross-section which deviates from the circular form, in which case the regions of the expansion member (10) having the smallest wall thicknesses (t) border on elongated slots (7, 8).

9. Expanding dowel according to Claim 8, **characterized in that** the cross-section of the blind-end bore (11) is elliptical or square, the principal axis of the ellipse or at least one diagonal of the square essentially coinciding with a diameter of the expanding sleeve (2), which connects two elongated slots (7 or 8) lying opposite one another.

10. Expanding dowel according to Claim 9, **characterized in that** all the elongated slots (7, 8) have the same width, and **in that** the edges (9), facing the through bore (3), of the peripheral faces of those elongated slots (8) bordered by the regions of the expansion member (10) having the smallest wall thicknesses (t) are chamfered.

11. Expanding dowel according to one of the preceding claims, **characterized in that** the expanding sleeve (2) is made of steel and **in that** the expansion member (10) is made of a softer metal, in particular aluminium.

## Revendications

1. Cheville à expansion avec un manchon expansible (2), qui, à l'une de ses extrémités située à l'arrière, est muni de moyens d'application de charge (4) et, dans sa portion opposée, comporte une zone d'expansion (5) qui est pourvue de fentes longitudinales (7, 8) ouvertes vers l'extrémité avant côté direction de scellement (6), et avec un corps d'expansion (10) qui peut être avancé d'une position initiale jusqu'à une position extrême dans un trou débouchant (3) du manchon expansible (2) qui se rétrécit vers l'extrémité avant côté direction de scellement (6) en déployant la zone d'expansion (5), **caractérisée en ce que** sur le manchon expansible (2) et/ou sur le corps d'expansion (10) sont prévus des moyens permettant de réaliser, lors de l'opération de scellement, une déformation à symétrie radiale irrégulière au moins dans une zone partielle de l'extension longitudinale du corps d'expansion (10).

2. Cheville à expansion selon la revendication 1, **caractérisée en ce que** les moyens sont formés par des fentes longitudinales voisines (7, 8) dans la zone d'expansion (5) du manchon expansible (2), lesquelles présentent des largeurs de fentes (w, b) de dimensions différentes.

3. Cheville à expansion selon la revendication 2, **caractérisée en ce qu'**il est prévu un nombre pair de fentes longitudinales (7, 8), des fentes longitudinales (7, 8) diamétralement opposées sur le manchon expansible (2) présentant la même largeur de fente (w, b).

4. Cheville à expansion selon la revendication 2 ou 3, **caractérisée en ce que** la largeur de fente (b) des fentes longitudinales les plus larges (8) correspond jusqu'au double de la largeur de fente (w) des fentes longitudinales les plus étroites (7) et correspond à environ 1 fois à environ 3 fois l'épaisseur de paroi (h) du manchon expansible (2) à l'extrémité arrière de celui-ci.

5. Cheville à expansion selon une des revendications 2 à 4, **caractérisée en ce que** les surfaces de délimitation des fentes longitudinales les plus larges (8) sont chanfreinées au niveau de leurs bords (9) tournés vers le trou débouchant (3).

6. Cheville à expansion selon une des revendications 2 à 5, **caractérisée en ce que** le corps d'expansion (10) est pourvu, à son extrémité tournée vers l'extrémité avant (6) du manchon expansible (2), d'un trou borgne (11) qui s'étend sur environ la moitié à environ un tiers de la longueur totale (1) du corps d'expansion (10).

7. Cheville à expansion selon la revendication 6, **caractérisée en ce que** le corps d'expansion (10) possède différentes épaisseurs de paroi dans la zone du trou borgne (11), et **en ce que** le trou borgne (11) présente une section transversale qui diffère de la forme circulaire, les zones du corps d'expansion (10) possédant les épaisseurs de paroi les plus faibles (t) étant adjacentes aux fentes longitudinales (8) présentant les largeurs de fente les plus grandes (b).

8. Cheville à expansion selon la revendication 1, **caractérisée en ce que** les moyens sont formés par un trou borgne (11) qui est ménagé dans le corps d'expansion (10), qui débouche à l'extrémité du corps d'expansion (10) tournée vers l'extrémité avant (6) du manchon expansible (2), qui s'étend sur environ la moitié à environ trois quarts de la longueur totale (1) du corps d'expansion (10) et qui présente une section transversale différant de la forme circulaire, les zones du corps d'expansion (10) possédant les épaisseurs de paroi les plus faibles (t) étant adjacentes aux fentes longitudinales (7, 8).

9. Cheville à expansion selon la revendication 8, **caractérisée en ce que** la section transversale du trou borgne (11) est elliptique ou carrée, l'axe principal de l'ellipse ou, respectivement, au moins une diagonale du carré coïncidant sensiblement avec un diamètre du manchon expansible (2) qui relie deux fentes longitudinales mutuellement opposées (7 ou, respectivement, 8).

10. Cheville à expansion selon la revendication 9, **caractérisée en ce que** toutes les fentes longitudinales (7, 8) présentent la même largeur de fente, et **en ce que** les bords (9), tournés vers le trou débouchant (3), des surfaces de délimitation des fentes longitudinales (8) auxquelles sont adjacentes les zones du corps d'expansion (11) possédant les épaisseurs de paroi les plus faibles (t) sont chanfreinées.

11. Cheville à expansion selon une des revendications précédentes, **caractérisée en ce que** le manchon expansible (2) est réalisé en acier, et **en ce que** le corps d'expansion (10) est constitué d'un métal plus tendre, en particulier d'aluminium.
